(19) Europäisches Patentamt
European Patent Office
Office européen des brevets

(11) **EP 1 978 467 A1**

(12) **EUROPEAN PATENT APPLICATION**

(43) Date of publication:
**08.10.2008 Bulletin 2008/41**

(51) Int Cl.:
**G06F 21/22** (2006.01)

(21) Application number: **07251529.9**

(22) Date of filing: **05.04.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **STMicroelectronics (Research &
Development)
Limited
Marlow, Buckinghamshire SL7 1YL (GB)**

(72) Inventors:
• **Elliott, Paul**
  **Bristol, BS7 8QS (GB)**
• **Bennett, Peter**
  **Bristol, BS48 4Q8 (GB)**

(74) Representative: **Loveless, Ian Mark**
**Reddie & Grose
16 Theobalds Road
London
WC1X 8PL (GB)**

(54) **Integrated circuit and method for secure execution of software**

(57)    A semiconductor integrated circuit is arranged to execute a computer executable code which is stored in a form needing to undergo a cryptographic process to render the code executable. The cryptographic process could be any one of descrambling, decryption or deobfuscation or any other process generally used to take data from a non-plain form to a plain form. The cryptographic unit is arranged to carry out a cryptographic process according to a cryptographic key and operated on at least a portion of at least some of the memory addresses of the code requests. By operating the cryptographic process on the memory addresses, the cryptographic process may be very quick. The result of the cryptographic process is then combined in a combining means with the code fetched from the memory to render it into an executable form. The combining is preferably straightforward logic such as an XOR arrangement which takes very little processing time.

Figure 2

## Description

## FIELD OF THE INVENTION

The present invention relates to semiconductor integrated circuits for use in devices where it is desirable to prevent unauthorised manufacture of copies of those devices and use code intended for a different device.

## BACKGROUND OF THE INVENTION

In conditional access devices for pay television, or any other device using memory and requiring security, there is a need to prevent cloning. Cloning in this sense is the unauthorised use of copied code on hardware on which it was not intended that the code should be run.

Semiconductor integrated circuits, conveniently referred to below simply as 'circuits', are ubiquitous in modern electronic devices including mobile telephones, pay-television systems, and many other widely used devices. One problem faced by manufacturers of these kinds of devices is that unscrupulous traders attempt to manufacturer and sell illegitimate copies of such devices, drawing valuable custom away from the legitimate device manufacturer. Legitimate device manufacturers typically purchase circuits from another party and assemble them according to their own design. Copying of electronic devices by illegitimate parties, known as cloning, is achieved by obtaining the necessary components including integrated circuits and assembling them into an exact copy of the physical circuit board of the device manufacturer, thereby creating an unauthorised copy of the whole device. The software from the original device, executed by a circuit in the device allowing the device to function, is then copied to the cloned device.

A solution to this problem is for the device manufacture to use software that is unique to themselves and for the manufacturer of the circuits to provide circuits that will properly execute only the software of that particular device manufacturer. Such an arrangement may be described as providing a circuit that is personalised to a device manufacturer's unique software. In this scheme, different device manufacturers use different software and so require circuits that are personalised to that different software. In this way, so long as the circuit manufacturer supplies circuits personalised to a particular device manufacturer's software only, cloning of devices is prevented. This is because when an illegitimate party constructs a copy of a legitimate device and copies the software from that device, the circuit comprised in the copied device would not be correctly personalised to the copied software since correctly personalised circuits would only be supplied to the legitimate device manufacturer and the illegitimate party would therefore not be able to obtain them.

One problem with this approach is that the manufacture of a different circuit design type is required for each end device manufacturer. This involves the time consuming process of testing each separate circuit type at the manufacturing stage and the logistical difficulty in distributing the appropriate circuit to each device manufacturer.

We have appreciated the need to provide both integrated circuits and software arranged such that software intended for certain one type of circuit is only allowed to execute on those types of circuit. We have further appreciated that this need should be met whilst minimising the need to design different circuits or the need for writing different software for different devices.

## SUMMARY OF THE INVENTION

The invention is defined in the claims to which reference is now directed. The invention provides an arrangement by which software code can be rendered unexecutable unless an appropriate secret is provided, and by which such software may be rendered executable without noticeable time delay.

## BRIEF DESCRIPTION OF THE FIGURES

An embodiment of the invention will now be described by way of example only and with reference to the figures in which:

Figure 1: shows the main components of a known conditional access device such as a set-top-box that may embody the invention;

Figure 2: shows the detail of an integrated circuit embodying the invention;

## DESCRIPTION OF A PREFERRED EMBODIMENT

The invention may be embodied in an integrated circuit used in a variety of different devices used for multiple purpose applications. The preferred embodying device is a conditional access unit commonly referred to as a "set top box", that is a device that provides access to broadcast services, such as television, only if various conditions are met. Other devices in which the integrated circuit embodying the invention may be used include audio and players such as DVD, MP3 and other format players, broadcast receivers and in general any device requiring security such that code cannot be copied and run on the device.

A problem faced by manufacturers of these kinds of devices is that unscrupulous traders attempt to manufacturer and sell illegitimate copies of such devices, drawing valuable custom away from the legitimate device manufacturer. Legitimate device manufacturers typically purchase circuits from another party and assemble them according to their own design. Copying of electronic devices by illegitimate parties, known as cloning, is achieved by obtaining the necessary components and assembling them into an exact copy of the physical circuit board of the device manufacturer, thereby creating an unauthorised copy of the whole device. The software from the original device, executed by a circuit in the device allowing the device to function, is then copied to the cloned device.

The main application of the embodying integrated circuit is conditional access to broadcast signals. A wide variety of techniques for broadcast transmission are known in which the broadcast signal is encoded, scrambled or encrypted in some way to allow only authorised recipients to retrieve the original signal. One particular field in which this area has been researched is broadcast television.

The broadcast of television signals in which only permitted or authorised recipients can produce the clear television picture from those signals is known as Conditional Access Television or Pay-TV. In this context, broadcast can include over-air, via satellite, by cable or indeed any appropriate distribution medium in which the same signal content is sent to many recipients. Television signals may be analogue signals or digital signals. The term "scrambling" is often used for the process of rendering analogue signals unusable until "descrambled", whereas the terms "encryption" and "decryption" are more often used for digital signals. In either case, the aim is to only allow users that have paid a subscription to descramble/decrypt the signals.

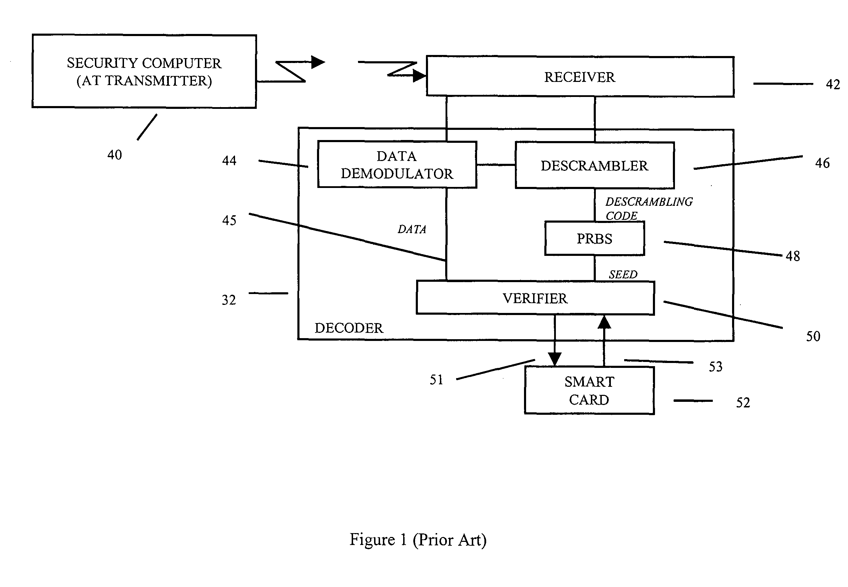

A known system and receiver in which the invention may be embodied is illustrated in Figure 1. The concept in this system is to broadcast signals (by cable) which can be received by anyone, but only rendered usable by recipients having a "set top box" decoder 32 and an associated smart card 52. The decoders 32 of all recipients are identical, but the smart cards 52 contain unique secrets, including entitlements, which specify which channels within the broadcast signals the user is permitted to watch. The system operates broadly as follows.

A television signal is broadcast over air in a scrambled form from a transmitter 40 and includes a stream of control data describing how the television signal is to be descrambled. The television signals and control data are necessarily the same signal sent to all users. It is not feasible to send the signals uniquely scrambled/encrypted to each recipient as there may be tens of millions of users and this would require tens of millions of times the bandwidth. Accordingly, all recipients must be able to operate the same descrambling/decryption process. This is implemented in the decoder 32, which receives the broadcast signals from a receiver 42. A data demodulator 44 extracts the portion of the signal for picture and/or sound and provides this to a descrambler 46 for descrambling. The control data portion is extracted and provided to a verifier 50 over line 45. The control data comprises encrypted control words, which are needed to instruct the descrambler how to descramble the picture/sound signal. The control words must therefore be decrypted, and it is for this purpose that the smart card 52 is provided.

The verifier 50 provides encrypted control words across an interface along line 51 to the smart card 52. The smart card 52 contains an algorithm, which, if the user is entitled to watch the chosen channel, decrypts the control words and provides them to the verifier 50 via line 53. The verifier passes the decrypted control words to a PRBS 48, which in turn provides a descrambling code to the descrambler. It should be noted that the control words and hence the descrambling code change frequently (every few seconds). The security in this arrangement is thus that it is not feasible to try and decrypt the control words in real time without the smart card algorithm. Also, in the event that the smart card algorithm is compromised, then the smart cards themselves can be re-issued to all subscribers. Lastly, to view any channels, a user must pay for "entitlements" which are broadcast over air addressed uniquely to each user and stored in the smart card 52. The conditional access security is provided in the circuit described by the verifier integrated circuit 50.

In the manufacture of such set top boxes, the security features of the verifier are provided by an integrated circuit. There are two principal versions of set top box: so called "freeview" devices that are able only to receive and process certain television channels, and conditional access set top boxes that require a user to have particular rights to view given television channels. In both such versions of device, software code is executed by the integrated circuit that implements the security features. In addition, each set top box manufacturer will have their own type of software code to be executed. However, this code should only be executable on the integrated circuits supplied to that manufacturer and not on integrated circuits supplied to other manufacturers or, importantly, on "freeview" boxes.

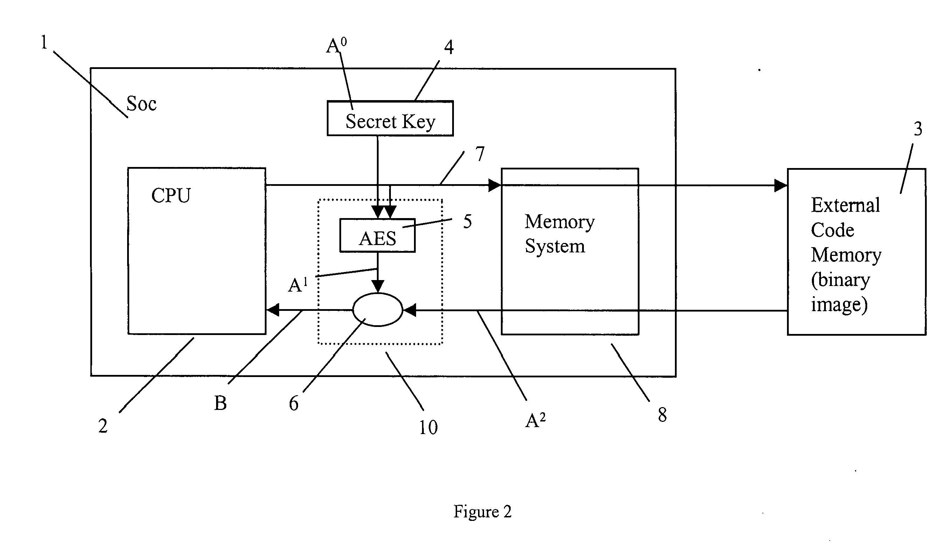

The embodiment of the invention comprises an integrated circuit that only allows code encrypted, obfuscated or scrambled according to a given scheme to be executed. The circuit may be implemented as part of the verifier circuit 50 described in Figure 1 and an example integrated circuit 1 embodying the invention is shown in Figure 2. In the embodiment, the executable code is stored in an encrypted, scrambled or obfuscated form. The term cryptographic process will be used herein to describe the process of rendering code un-executable until rendered into executable form again by a cryptographic process. The term cryptographic process is used, therefore, to encompass processes that may include one or more of encryption, scrambling and obfuscation and as will become apparent. The preferred scheme used is a process puts the code into a form that requires a cryptographic process dependent upon the address at which the data/code is being stored to render the code into executable form.

The executable code is pre-stored in a memory 3 after undergoing a cryptographic process. The cryptographic process is such that a key must be provided if the code is to be rendered executable. An attacker will be unable to take the code stored on the memory and run it on the same or identical CPU without knowing the secret key. In this way cloning of the software stored on the external memory 3 is prevented.

The embodiment of the invention, as shown in figure 2, provides a system on chip (SoC) 1 featuring a CPU 2 arranged to retrieve instruction code from an external memory 3. The external memory is preloaded with instruction code that has been rendered unusable by a cryptographic process and which requires "decryption" before it can be run by the CPU. By storing the executable code in a pre-encrypted form, the code only needs to be decrypted in the direction from the memory device to the CPU.

A cryptographic unit 10 comprises an encryption block 5 which is keyed with a secret key value, $A^0$, and is coupled to the bus 7 via which the CPU retrieves instruction code from the external memory. On a cache read request from the CPU, the encryption block will carry out a cryptographic process on the address portion of the read request using secret key value $A^0$, and create an address dependent binary value $A^1$. The binary instruction code retrieved from the external memory, here referred to as $A^2$, is combined with the output of the encryption block, $A^1$, by combining means 6 resulting in the decryption of the executable code stored on the external memory such that the CPU may process the code. In the event that the code fails to execute when run by the CPU a chip reset occurs preventing normal functioning of the circuit.

The cryptographic process carried out by the encryption block 5 is dependent upon the secret key, A0, which is stored on a key store 4 which resides within the SoC. The SoC embodying the invention is a monolithic device to prevent hackers from replacing components illegitimately or from feeding their own values into the system which would compromise the security of the system.

The secret key could be provided from an external source such as a smart card using a secure link between the circuit and the smartcard.

In the embodiment, the cryptographic unit 10 also comprises a combining means 6 in the form of an XOR logic gate by which the encrypted data, $A^2$, requested from the external memory is combined with the output of the encryption block, $A^1$. A decrypted code, B, suitable for execution by the CPU is produced by the logic calculation:

$$B = A^1 \text{ xor } A^2$$

The XORing of these values is a quick process that does not introduce a significant latency into the system. The latency introduced by the computation of the encryption block is substantially less than the latency already present in the circuit due to the retrieving of instruction code from the memory by the CPU via the memory system 8 and is therefore hidden during operation. Typically the memory system introduces at least 25 cycles of latency whilst the computation of the encryption block will introduce around 20 cycles. The use of an XOR function operating on the AES computation of the address is thereby much faster than attempting to operate an AES computation on the code itself. By XORing the encrypted executable code with a value determined by a secret key, even if a hacker were able to work out value $A^1$ it would not then be trivial to work out the secret key from this.

Whilst it is within the scope of the invention to encrypt the entire binary code before storage on the memory device, an advantage afforded by the preferred embodiment of the invention is that only a portion of the address needs to be encrypted and, additionally, only a relatively small number of addresses need to be partially encrypted to render the code unreadable to anyone who does not know the secret code. This further reduces the latency and processing involved in decrypting the code.

Any configurable amount of address could be encrypted. It is important though that the amount of the address encrypted can be configured, for example by selecting a top and bottom address range.

The encryption method used to encrypt the executable code stored on the memory does not have to be symmetric. That is, a double key can be used wherein the key used to encrypt the data does not have to be the same key used to decrypt the data. In this way it is possible for a set top box manufacturer to program their own executable code, encrypt it themselves, and write it to the memory without knowing the secret code required to decrypt the stored executable code and allow it to execute properly on the SoC. This allows the chip manufacturer to control the use of the chips since a given set top box manufacturer can be provided with chips programmed with a secret key specific to them. The chip manufacturer then provides the necessary key required to encrypt their executable code such that when it is run on their chip it executes properly. This approach is computationally expensive, though.

As a preferred feature the cryptographic process is based on the Advanced Encryption Standard (AES). It would, however, be appreciated by the skilled person that any encryption method that allows encryption of occasional instructions would also be suitable.

When a device incorporating a circuit according to the present invention is copied or cloned, the software executed by the circuit in the original device will be copied and loaded into the cloned device. One advantage of the present invention is that the circuit incorporated into the cloned device would not properly execute the copied software unless the secret code were known to the hacker. If a hacker attempted to replace the legitimate software loaded into a device with his own modified software in order to breach the security of the device, the device would no longer function as the modified software would not be encrypted such that XORing with value $A^1$ results

in decryption of the code.

As a further preferred feature relative addressing can be incorporated into the present invention to allow Linux loadable modules to be used, or other systems using relative addressing.

Relative addressing is a technique wherein a logical expression is used to calculate an address rather than specifying a memory location by a specific address. As a preferred feature the address used to seed the AES block is an offset from the module base address. The base address serves as a reference point and the offset is a value added to the base address to specify an absolute memory address.

To make this feature work it is necessary to modify the CPU to provide as an output both the physical and virtual instructions address.

The arrangement can work because the bottom 12 bits of the virtual address are the same as the bottom 12 bits of the physical address, so just the bottom 12 bits can be used as the seed to the AES block.

**Claims**

1. A semiconductor integrated circuit arranged to receive and execute computer executable code, the computer executable code needing to undergo a cryptographic process to render the code executable, the circuit comprising:

  - a processor arranged to request and execute code pre-stored in a code memory in a non-executable form;
  - a key store for storing a cryptographic key;
  - a cryptographic unit comprising a cryptographic circuit arranged to carry out a cryptographic process according to the cryptographic key on at least a portion of each of at least some of the memory addresses of the code requests made by the processor to the code memory, and a combining means arranged to combine the resulting values with the code fetched from the code memory in non-executable form to render the code into an executable form.

2. A semiconductor integrated circuit according to claim 1, wherein the combining means is an XOR logic circuit.

3. A semiconductor integrated circuit according to claim 2, wherein the executable code is pre-encrypted according to the memory address at which it is located such that when XOR'd with a value obtained by encrypting a memory address request from the CPU decryption of the executable code is produced.

4. A semiconductor integrated circuit according to claim 1, in which the decryption key is permanently recorded into the key memory at the circuit manufacturing stage.

5. A semiconductor integrated circuit according to claim 1, in which the processor is arranged to perform a circuit reset if the software is not properly executed.

6. A semiconductor integrated circuit according to any proceeding claim in which the circuit is a monolithic device.

7. A semiconductor integrated circuit according to any proceeding claim, wherein the at least a portion of the memory addresses is defined by the top and bottom address range of the addresses.

8. A semiconductor integrated circuit according to claim 7, wherein the at least a portion of the memory addresses comprises the bottom 12 bits.

9. An electronic device comprising the circuit of any of the proceeding claims.

10. A set-top-box comprising the circuit of any of any of the proceeding claims.

11. A method for preventing software cloning comprising the steps of:

  - encrypting the software to be executed by a processor and storing it on a memory device;
  - performing, according to a secret key, a cryptographic process on at least a portion of the address of a memory request made by a processor;
  - combining the encrypted portion of the address of the memory request with the result of the processor's memory request;
  - whereby the combining of the encrypted portion of the address of the memory request with the result of the processor's memory request decrypts the stored code and allows it to be properly executed by the circuit.

12. The method according to claim 11, in which the cryptographic processes use the AES algorithm.

Figure 1 (Prior Art)

External Code Memory (binary image)

3

Memory System

8

$A^2$

10

Secret Key

4

$A^0$

7

AES

5

$A^1$

6

B

CPU

Soc

1

2

Figure 2

**European Patent Office**

## EUROPEAN SEARCH REPORT

Application Number

EP 07 25 1529

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 345 359 B1 (BIANCO MARK E [US]) 5 February 2002 (2002-02-05) * column 3, line 45 - column 4, line 18; figures 2,3 * * column 4, line 44 - line 53 * * column 5, line 53 - column 6, line 3 * * column 6, line 64 - column 7, line 7 * ----- | 1-12 | INV. G06F21/22 |
| X | US 4 465 901 A (BEST ROBERT M [US]) 14 August 1984 (1984-08-14) * figure 1 * * column 9, line 54 - line 64 * * column 13, line 14 - line 50 * * column 18, line 16 - line 63 * * column 18, line 26 - line 49 * * column 21, line 51 - line 52 * ----- | 1-6,9-12 | |
| A | EP 0 171 456 A (WESTHEIMER THOMAS O [US]; HIPSON PETER D [US]) 19 February 1986 (1986-02-19) * the whole document * ----- | 1 | |
| A | US 6 236 728 B1 (MARCHANT BRIAN E [US]) 22 May 2001 (2001-05-22) * the whole document * ----- | 5 | TECHNICAL FIELDS SEARCHED (IPC) G06F |

The present search report has been drawn up for all claims

| Place of search | Date of completion of the search | Examiner |
|---|---|---|
| Munich | 18 September 2007 | Veillas, Erik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 25 1529

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2007

| Patent document cited in search report | | Publication date | Patent family member(s) | | Publication date |
|---|---|---|---|---|---|
| US 6345359 | B1 | 05-02-2002 | NONE | | |
| US 4465901 | A | 14-08-1984 | NONE | | |
| EP 0171456 | A | 19-02-1986 | NONE | | |
| US 6236728 | B1 | 22-05-2001 | US | 6240183 B1 | 29-05-2001 |

EPO FORM P0459

For more details about this annex : see Official Journal of the European Patent Office, No. 12/82